# EUROPEAN PATENT SPECIFICATION

(11) **EP 1 562 344 B1**
(45) Date of publication and mention of the grant of the patent: **18.10.2006**
(21) Application number: 05001723.5
(22) Date of filing: 27.01.2005
(51) Int. Cl.: H04L 29/06, H04L 29/08

(54) **Data receiving apparatus and data receiving method**
System und Verfahren für den Datenempfang
Système et procédé pour la réception des données

(30) Priority: 06.02.2004 JP 2004031117
(43) Date of publication of application: 10.08.2005
(73) Proprietor: NTT DoCoMo, Inc., Tokyo 100-6150 (JP)
(72) Inventor: Yoshimura, Takeshi c/o Intell. Property Dept., 2-chome, Chiyoda-ku, Tokyo 11-6150 (JP); Suzuki, Takashi c/o Intell. Property Dept., 2-chome, Chiyoda-ku, Tokyo 11-6150 (JP)
(74) Representative: GROSSE BOCKHORNI SCHUMACHER

(56) References cited:
- EP-A- 1 333 639
- US-A1- 2002 083 133
- US-A1- 2002 103 920

## Description

### BACKGROUND OF THE INVENTION

### Field of the Invention

The present invention relates to a data receiving apparatus and a data receiving method.

### Related Background Art

3GPP (3rd Generation Partnership Project) is working on MBMS (Multimedia Broadcast/Multicast Service) to implement the broadcast/multicast service in third-generation mobile communication systems. The MBMS provides only a downlink channel from a base station to a mobile station but provides no uplink channel from a mobile station to a base station. In digital broadcast, similarly, the service also provides only a downlink channel from a broadcast station to a receiver but provides no uplink channel from a receiver to a broadcast station.

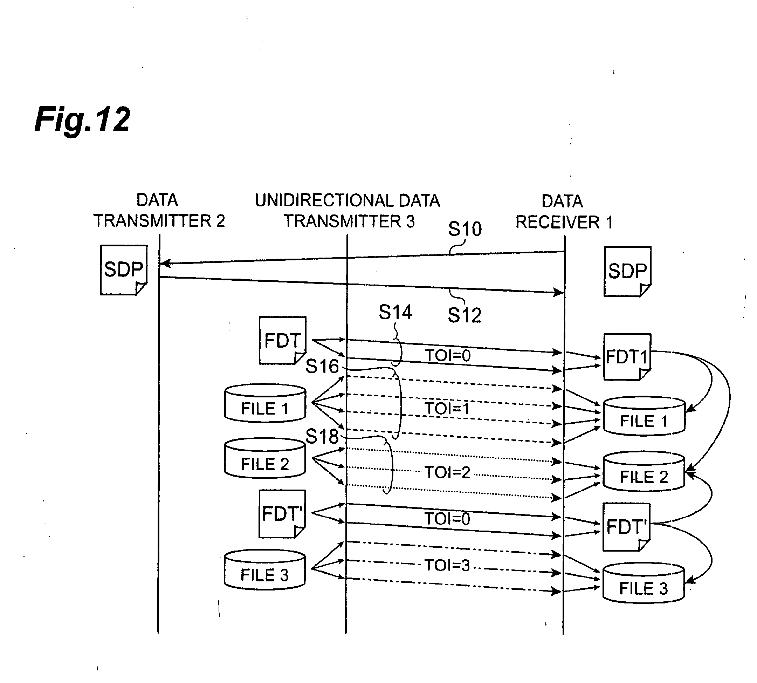

An example of the known technologies of delivering electronic files through the use of such a unidirectional channel is FLUTE (File Delivery over Unidirectional Transport), for example, as disclosed in Document "FLUTE-File Delivery over Unidirectional Transport, IETF RFC3926, October 2004" (hereinafter referred to as "Document 1"). Fig. 12 is an illustration showing a file delivery sequence in FLUTE. In FLUTE, a data receiver 1 to receive an electronic file first requests a data transmitter 2 that holds session information files for delivery of electronic files, to send session information of FLUTE by HTTP (HyperText Transport Protocol) (S10).

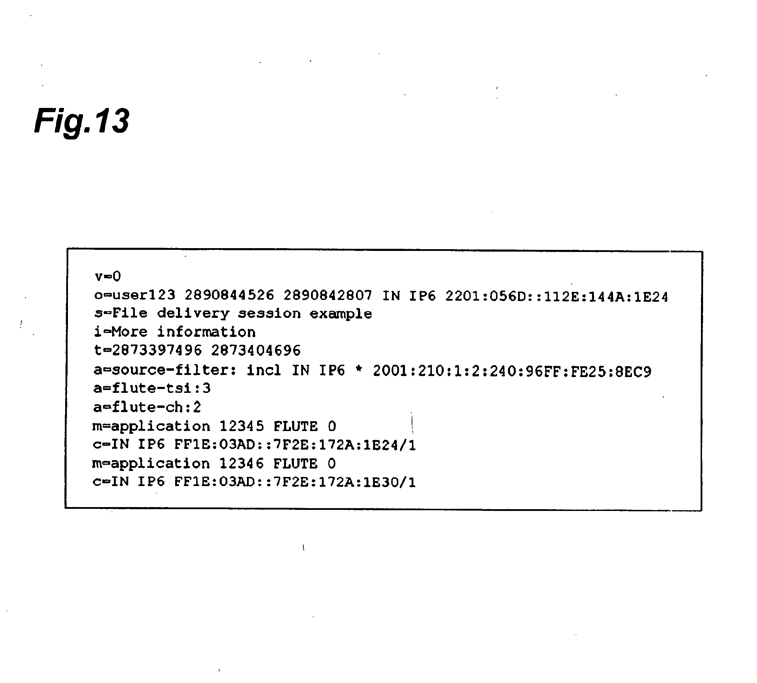

The session information herein is information necessary for establishment of a file delivery session through the unidirectional channel. This session information contains, for example, a destination IP address (a multicast address or the like) assigned to the session, a port number to be used for the electronic file delivery, and so on. Fig. 13 is an illustration showing a description example of the session information in FLUTE. The session information in FLUTE is typically described by SDP (Session Description Protocol), as shown in Fig. 13.

When receiving the request for the session information from the data receiver 1, the data transmitter 2 sends a session information file containing the session information (hereinafter referred to as an SDP file) to the data receiver 1 in response to the request (S12). The example described herein is one in which the data receiver 1 acquires the session information by HTTP, but it is also conceivable to acquire the session information through an e-mail, a broadcast channel using SAP (Session Announcement Protocol), or the like.

After the data receiver 1 receives the SDP file, the data receiver 1 reads the session information described in the SDP file, the data receiver 1 establishes a unidirectional channel for receiving the electronic file from the unidirectional data transmitter 3 according to the session information. If simultaneous reception through a bidirectional channel and a unidirectional channel is not available, the data receiver 1 once disconnects the bidirectional channel and then establishes only the unidirectional channel.

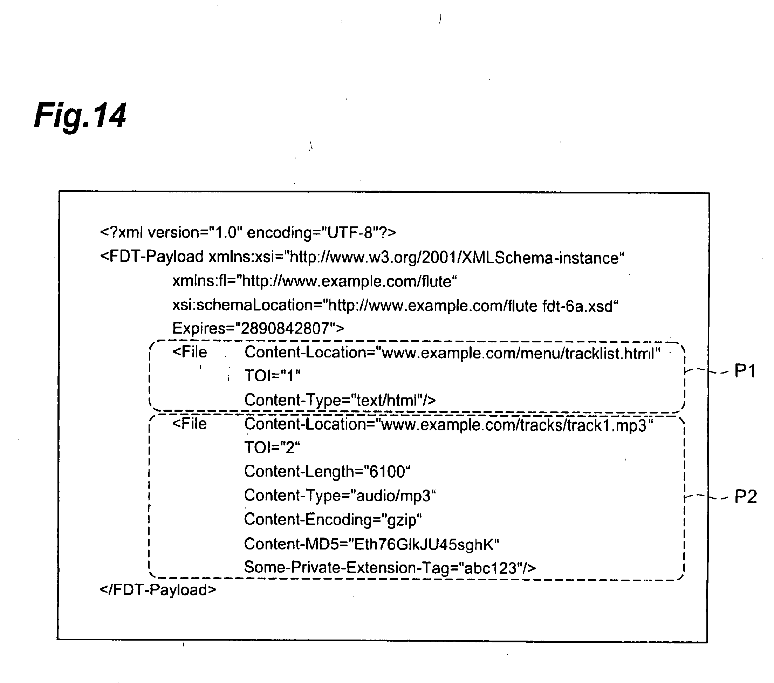

Using the unidirectional channel established in this manner, the unidirectional data transmitter 3 delivers the electronic file and a File Delivery Table (hereinafter referred to as FDT) containing attribute information of the electronic file, to the data receiver 1. More specifically, the unidirectional data transmitter 3 delivers the FDT containing the attribute information of the electronic file to be delivered, as object ID(TOI)=0 (S14). The data receiver 1 receives the FDT delivered from the unidirectional data transmitter 3, through the unidirectional channel. Fig. 14 is an illustration showing a description example of an FDT in FLUTE. The FDT contains the attribute information in the XML format, such as a file name, an object ID, a file type, a compression type, a data length, and a URL, for one electronic file or for each of two or more electronic files. It is seen herein that the FDT shown in Fig. 14 contains the description of the attribute information of an electronic file with object ID=1 (part P1 enclosed by dashed line) and the attribute information of an electronic file with object ID=2 (part P2 enclosed by dashed line).

Referring back to Fig. 12, after the delivery of the FDT, the unidirectional data transmitter 3 divides the electronic file into plural segments and delivers them. In the example shown in Fig. 12, the data transmitter 3 first divides the electronic file 1 with object ID=1 into a plurality of packets and delivers them (S16), and subsequently, the data transmitter 3 divides the electronic file 2 with object ID=2 into a plurality of packets and delivers them (S18). The data receiver 1 receives, through the unidirectional channel, the electronic files delivered from the unidirectional data transmitter 3. Thereafter, the data receiver 1 assembles each received electronic file and refers to the previously received FDT to transfer the assembled electronic file to an appropriate application. Where the electronic file is compressed herein, the data receiver 1 performs a decompression process according to a compression type described in the FDT, with reference to the FDT previously received.

FLUTE enables the delivery of relatively high volume of electronic files through the unidirectional channel in accordance with the procedure as described above. FLUTE ensures reliability in such a manner that, in addition to segmental data forming an electronic file, redundant data for recovery of the segmental data is also delivered to enable recovery of the segmental data even if part of the segmental data is lost.

Japanese Patent Application Laid-Open No. 2003-304511 (hereinafter referred to as "Document 2") discloses a method applied to a system for broadcasting SMIL (Synchronized Multimedia Integration Language) data corresponding to the session information and FDT, and video data, and arranged to continuously transmit these data, in order to facilitate initiation of reproduction of video.

### SUMMARY OF THE INVENTION

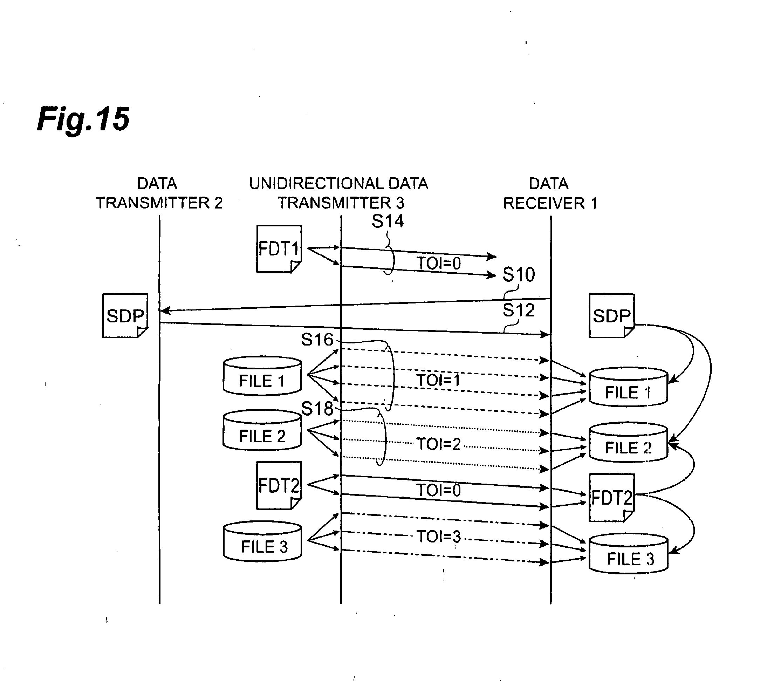

However, the unidirectional electronic file delivery technology using FLUTE as described in above Document 1 had the following problems. Fig. 15 is an illustration showing the problems of the unidirectional electronic file delivery technology using FLUTE. In the aforementioned unidirectional electronic file delivery technology using FLUTE, when an electronic file is received, the electronic file is transferred to an appropriate application with reference to the previously received FDT. Therefore, in a case where the unidirectional data transmitter 3 sends an FDT (S14), the data receiver 1 acquires the SDP file immediately thereafter (S10, S12), and then the data receiver 1 joins a session of unidirectional electronic file delivery to start receiving electronic files, as shown in Fig. 15, the data receiver 1 cannot determine the attributes of the received electronic files and fails to transfer the electronic files to an appropriate application. Where an electronic file is compressed, the data receiver 1 cannot read the compression type of the electronic file from the FDT, and thus fails to perform an appropriate decompression process.

For example, let us suppose that in Fig. 15 the FDT 1 contains the description of the attribute information of electronic file 1 and the attribute information of electronic file 2 and FDT 2 contains the description of the attribute information of electronic file 2 and the attribute information of electronic file 3. In this case, without receiving the FDT 1, the data receiver 1 cannot utilize the electronic file 1 even though the data receiver 1 receives the electronic file 1 without errors. In addition, without receiving the FDT 1, the data receiver 1 cannot utilize the electronic file 2 at the point of reception thereof even though the data receiver 1 receives the electronic file 2 without errors. The data receiver 1 becomes able to utilize the electronic file 2 when receiving the FDT 2 thereafter.

As described above, the unidirectional electronic file delivery technology using FLUTE described in Document 1 above has the problem that the FDT cannot be acquired depending upon the timing of acquiring the SDP file and starting the reception of electronic files, and the problem that an electronic file cannot be utilized before reception of the next FDT.

These problems were not solved by the technology described in Document 2 above, either.

The present invention has been accomplished in order to solve the above problems and an object of the present invention is therefore to provide a data receiving apparatus and a data receiving method in a manner of permitting the data receiving apparatus to acquire the attribute information of an electronic file before receiving the electronic file itself, regardless of the timing when the data receiving apparatus joins a session of unidirectional electronic file delivery, and thereby permitting the data receiving apparatus to utilize the electronic file upon receiving it.

In order to achieve the above object, a data receiving apparatus of the present invention comprises receiving means for receiving an electronic file and attribute information of the electronic file through a unidirectional channel; location information acquiring means for acquiring location information for specifying a location of the attribute information from session information necessary for the receiving means to establish a session through the unidirectional channel; and attribute information acquiring means for acquiring the attribute information from the location specified by the location information acquired by the location information acquiring means, before the receiving means starts receiving the electronic file.

In order to achieve the above object, a data receiving method of the present invention is a data receiving method of receiving an electronic file and attribute information of the electronic file through a unidirectional channel, comprising: a location information acquiring step of acquiring location information for specifying a location of the attribute information from session information necessary for establishment of a session through the unidirectional channel; and a attribute information acquiring step of acquiring the attribute information from the location specified by the location information acquired in the location information acquiring step, before a start of receiving the electronic file through the unidirectional channel.

By adopting the configuration wherein the location information for specifying the location of the attribute information is acquired from the session information and wherein the attribute information is acquired from the location specified by the location information, the attribute information of the electronic file can be acquired before the start of receiving the electronic file through the unidirectional channel.

The foregoing data receiving apparatus is preferably constructed in a configuration wherein the first attribute information acquiring means acquires the attribute information by receiving the attribute information through a bidirectional channel.

Since the attribute information is received by making use of the bidirectional channel, it becomes feasible to perform various controls in acquisition of the attribute information, e.g., a retransmission process or designation of required data upon occurrence of a transmission error.

The foregoing data receiving apparatus is preferably constructed in a configuration wherein the first attribute information acquiring means receives the attribute information through the bidirectional channel used for acquisition of the session information.

Since the attribute information is received through the bidirectional channel used for acquisition of the session information, no new bidirectional channel has to be established for acquiring the attribute information.

In order to achieve the above object, another data receiving apparatus of the present invention comprises receiving means for receiving an electronic file and attribute information of the electronic file through a unidirectional channel; location information acquiring means for acquiring location information for specifying a location of the attribute information from session information necessary for the receiving means to establish a session through the unidirectional channel; and attribute information acquiring means for acquiring the attribute information from the location specified by the location information acquired by the location information acquiring means, when the receiving means does not receive the attribute information of the electronic file though the receiving means receives the electronic file.

In order to achieve the above object, another data receiving method of the present invention is a data receiving method of receiving an electronic file and attribute information of the electronic file through a unidirectional channel, comprising: a location information acquiring step of acquiring location information for specifying a location of the attribute information from session information necessary for establishment of a session through the unidirectional channel; and a attribute information acquiring step of acquiring the attribute information from the location specified by the location information acquired in the location information acquiring step, when the attribute information of the electronic file is not received though the electronic file is received through the unidirectional channel.

By adopting the configuration wherein the location information for specifying the location of the attribute information is acquired from the session information and wherein the attribute information can be acquired from the location specified by the location information, the attribute information of the electronic file already received can be acquired from the location specified by the location information even when the attribute information is not received through the unidirectional channel.

The foregoing data receiving apparatus is preferably constructed in a configuration wherein the second attribute information acquiring means acquires the attribute information by receiving the attribute information through a bidirectional channel.

Since the attribute information is received through the bidirectional channel, it becomes feasible to perform various controls in acquisition of the attribute information, e.g., a retransmission process or designation of required data upon occurrence of a transmission error.

The foregoing data receiving apparatus is preferably constructed in a configuration wherein the second attribute information acquiring means selectively requests the unreceived attribute information of the received electronic file, and receives the unreceived attribute information.

Since only the unreceived attribute information of the received electronic file is selectively requested and received, the required attribute information can be efficiently acquired.

According to the present invention, the attribute information of the electronic file can be acquired before the start of receiving the electronic file through the unidirectional channel. As a result, it is feasible to acquire the attribute information of the electronic file, regardless of the timing of joining the session of the unidirectional electronic file delivery, and to effectively utilize the electronic file.

According to the present invention, the attribute information of the electronic file already received can be acquired from the location specified by the location information. As a result, it is feasible to acquire the attribute information of the electronic file, regardless of the timing of joining the session of unidirectional electronic file delivery, and to effectively utilize the electronic file.

### BRIEF DESCRIPTION OF THE DRAWINGS

Fig. 1 is a configuration diagram of a network system incorporating a data receiving apparatus.

Fig. 2 is a configuration diagram of the data receiving apparatus.

Fig. 3 is an illustration showing a description example of session information.

Fig. 4 is a flowchart showing the operation of the data receiving apparatus.

Fig. 5 is an illustration showing a delivery sequence of electronic files to the data receiving apparatus.

Fig. 6 is an illustration showing a delivery sequence of electronic files to the data receiving apparatus.

Fig. 7 is an illustration showing a description example of an e-mail containing an SDP file and an FDT.

Fig. 8 is a flowchart showing the operation of the data receiving apparatus.

Fig. 9 is an illustration showing a delivery sequence of electronic files to the data receiving apparatus.

Fig. 10 is a configuration diagram of a data transmitting device.

Fig. 11 is an illustration showing the operation of data transmitter 80.

Fig. 12 is an illustration showing a file delivery sequence in FLUTE.

Fig. 13 is an illustration showing a description example of session information in FLUTE.

Fig. 14 is an illustration showing a description example of an FDT in FLUTE.

Fig. 15 is an illustration showing the problems of the unidirectional electronic file delivery technology using FLUTE.

### DESCRIPTION OF THE PREFERRED EMBODIMENTS

A data receiving apparatus according to the first embodiment of the present invention will be described.

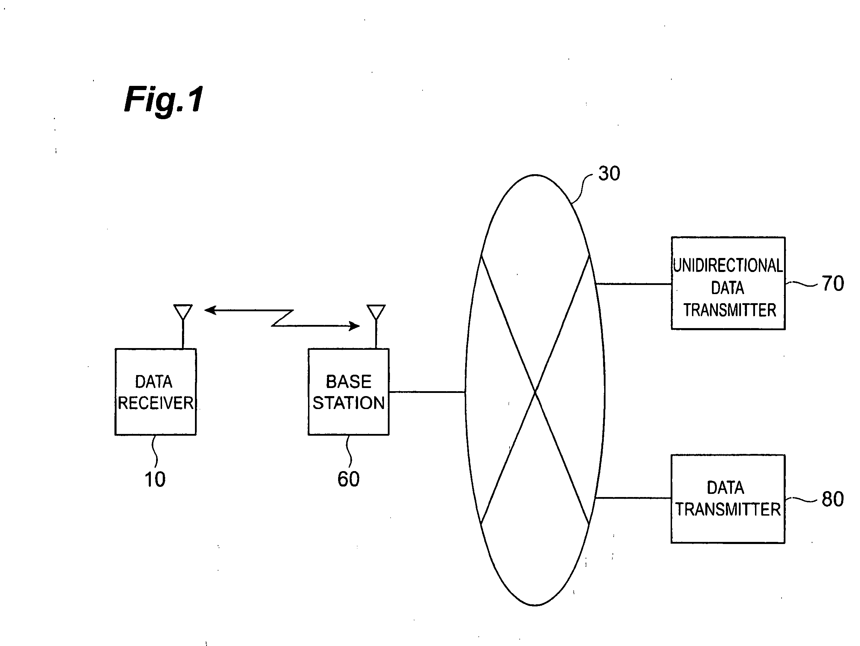

First, a configuration of a network system incorporating a data receiving apparatus of the present invention will be described. Fig. 1 is a configuration diagram of a network system incorporating a data receiving apparatus of the present invention. The data receiving apparatus 10 of the present invention, as shown in Fig. 1, is connected through base station 60 and network 30 to a unidirectional data transmitter 70 and to a data transmitter 80. Here the unidirectional data transmitter 70 has a function of performing file delivery through a unidirectional channel to the data receiving apparatus 10 by FLUTE (File Delivery over Unidirectional Transport). The data transmitter 80 has a function of transmitting a session information file (hereinafter referred to as an SDP file) containing the session information necessary for the data receiving apparatus 10 to establish a session through a unidirectional channel, to the data receiving apparatus 10 by HTTP (HyperText Transfer Protocol).

The example herein uses FLUTE as a file delivery protocol on a unidirectional channel, but it may be another protocol as long as it is a file delivery protocol on a unidirectional channel. Likewise, the example herein uses HTTP as a protocol for transmission of the SDP file, but it may be any other protocol. The example herein uses the SDP file as a file containing the session information of FLUTE, but it may be any other file.

The example herein describes the system incorporating the data receiving apparatus 10, base station 60, unidirectional data transmitter 70, and data transmitter 80 one each, but the system may incorporate two or more each of these. In the above example the data receiving apparatus 10 is connected through the base station 60 to the unidirectional data transmitter 70 and to the data transmitter 80, but the data receiving apparatus 10 may be connected through a wired link to the unidirectional data transmitter 70 and to the data transmitter 80.

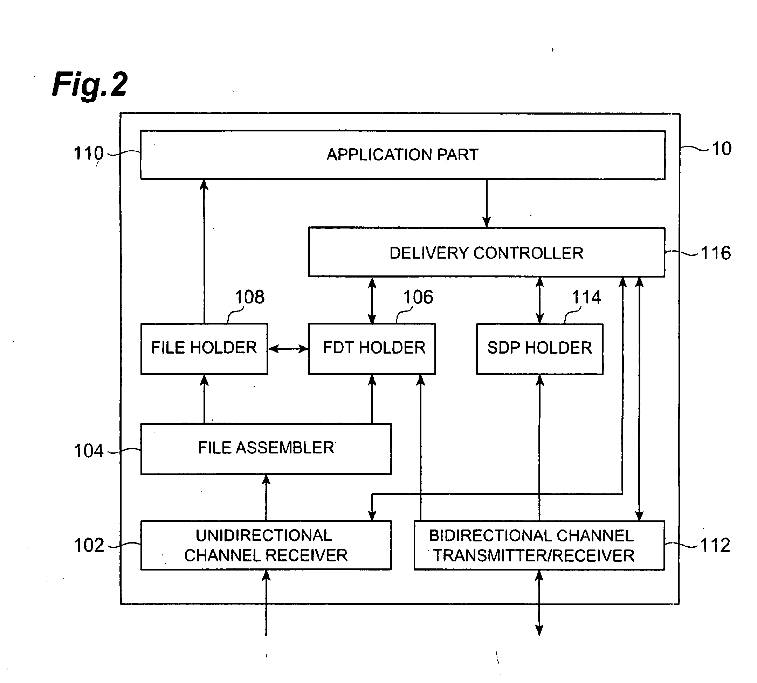

Subsequently, a configuration of the data receiving apparatus 10 according to the present embodiment will be described. Fig. 2 is a configuration diagram of the data receiving apparatus 10 according to the present embodiment. The data receiving apparatus 10 of the present embodiment is comprised of a unidirectional channel receiver 102 (receiving means), a file assembler 104, an FDT holder 106, a file holder 108, an application part 110, a bidirectional channel transmitter/receiver 112 (first attribute information acquiring means), an SDP holder 114, and a delivery controller 116 (location information acquiring means). Each of the components will be described below in detail.

The unidirectional channel receiver 102 receives an FDT (File Delivery Table) and an electronic file transmitted through a unidirectional channel by FLUTE from the unidirectional data transmitter 70. Here the FDT contains the description of the attribute information (a file name, an object ID, a file type, a compression type, a data length, a URL, etc.) of an electronic file to be transmitted by the unidirectional data transmitter 70. Each of the FDT and the electronic file is reconstructed from one or more segmental data forming the FDT or the electronic file, and redundant data for recovery of lost segmental data.

The file assembler 104 restores the FDT and the electronic file, based on the segmental data and the redundant data received by the unidirectional channel receiver 102. More specifically, the file assembler 104 assembles the segmental data received by the unidirectional channel receiver 102 to restore the FDT and the electronic file. For example, in a case where part of the segmental data is lost, the file assembler 104 attempts to recover lost segmental data by FEC decoding using the redundant data received by the unidirectional channel receiver 102, and utilizes the recovered segmental data for restoration of the FDT and the electronic file.

The FDT holder 106 holds (or stores) the FDT restored by the file assembler 104.

The file holder 108 holds (or stores) the electronic file restored by the file assembler 104.

The application part 110 is an application program that operates by making use of the electronic file stored in the file holder 108.

The bidirectional channel transmitter/receiver 112 establishes a bidirectional channel and performs bidirectional data transmission/reception. More specifically, the bidirectional channel transmitter/receiver 112 receives an SDP file transmitted from the data transmitter 80, through a bidirectional channel, by making use of a protocol such as HTTP. Here the SDP file contains the session information necessary for the data receiving apparatus 10 to establish a session through a unidirectional channel when the data receiving apparatus 10 receives an electronic file transmitted from the unidirectional data transmitter 70.

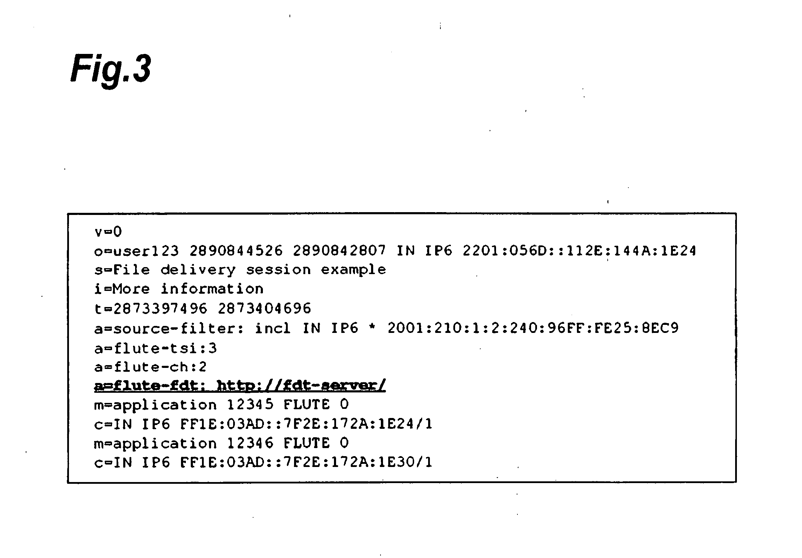

Fig. 3 is an illustration showing a description example of the session information in an SDP file. The SDP file, as shown in Fig. 3, contains an IP address assigned to the session through a unidirectional channel, a port number of an application used for reception of an electronic file by the data receiving apparatus 10, and so on. The SDP file describing the session information contains location information for specifying a location of an FDT (attribute information). Since the FDT is normally transmitted from the unidirectional data transmitter 70, the location of the FDT must be the unidirectional data transmitter 70; however, the location information stated herein contains description of a location of an FDT that can be transmitted through a bidirectional channel, i.e., description of an address or URL or the like of a data transmitting device capable of transmitting the FDT in place of the unidirectional data transmitter 70 (e.g., the data transmitter 80). Since the example shown in Fig. 3 contains the description of "a=flute-fdt:http://fdt-server/" (underlined portion in Fig. 3), it is seen that the location of the FDT is "http://fdt-server/".

The SDP holder 114 holds (or stores) the SDP file received by the bidirectional channel transmitter/receiver 112.

The delivery controller 116 acquires the location information for specifying the location of the FDT, from the SDP file held in the SDP holder 114, and outputs the location information to the bidirectional channel transmitter/receiver 112.

The bidirectional channel transmitter/receiver 112 acquires the FDT from the location specified by the location information acquired by the delivery controller 116, before the unidirectional channel receiver 102 starts to receive the electronic file. More specifically, the bidirectional channel transmitter/receiver 112 transmits a request for transmission of the FDT by HTTP or some other protocol to the location specified by the location information (e.g., the data transmitter 80) through the bidirectional channel, and receives the FDT transmitted in response thereto. In this case, the bidirectional channel transmitter/receiver 112 receives the FDT, using the bidirectional channel having been used for the acquisition of the foregoing SDP file (without disconnection). The bidirectional channel transmitter/receiver 112 outputs the received FDT to the FDT holder 106. Namely, the FDT received by the bidirectional channel transmitter/receiver 112 is also held (stored) in the FDT holder 106 as the FDT received by the unidirectional channel receiver 102 is.

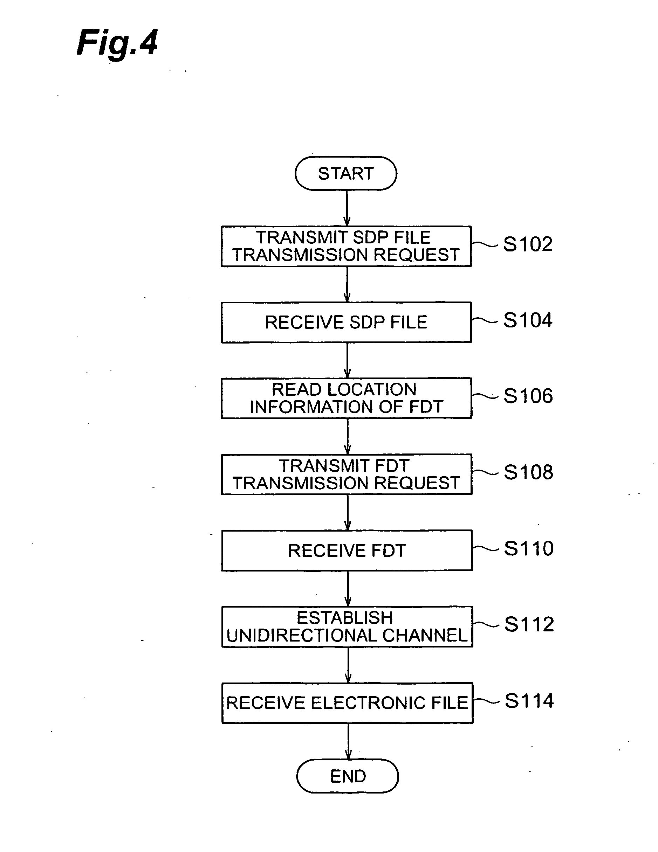

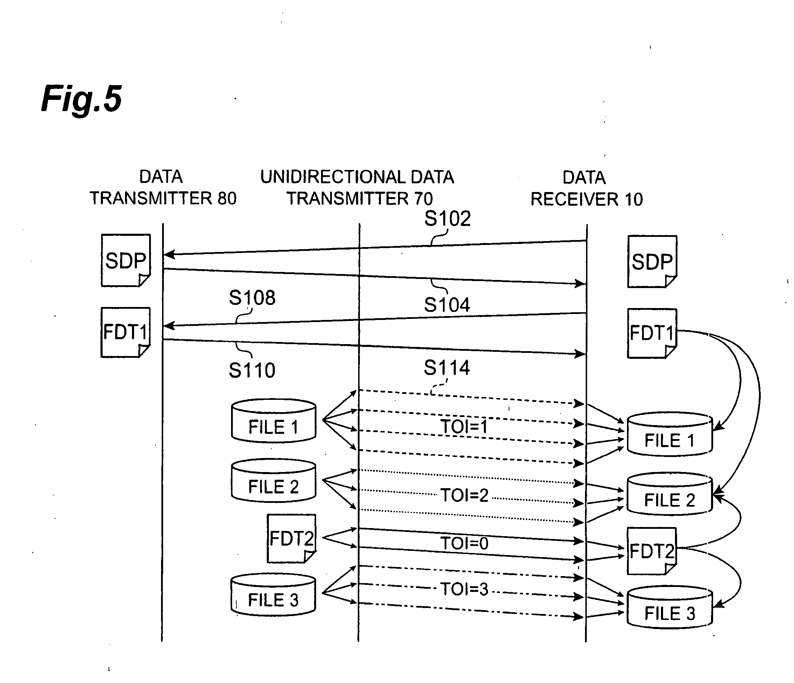

Subsequently, the operation of the data receiving apparatus according to the present embodiment will be described. Fig. 4 is a flowchart showing the operation of the data receiving apparatus 10 according to the present embodiment, and Fig. 5 is an illustration showing a delivery sequence of electronic files to the data receiving apparatus 10 according to the present embodiment.

When the data receiving apparatus 10 is to receive and utilize an electronic file transmitted from the unidirectional data transmitter 70, the bidirectional channel transmitter/receiver 112 of the data receiving apparatus 10 first establishes a bidirectional channel and transmits a request for transmission of an SDP file to the data transmitter 80 (S102).

When the data transmitter 80 receives the SDP file transmission request, the data transmitter 80 transmits the SDP file to the data receiving apparatus 10 in response thereto (S104). The SDP file transmitted herein from the data transmitter 80 contains the session information necessary for the data receiving apparatus 10 to establish a session through a unidirectional channel when the data receiving apparatus 10 receives an electronic file transmitted from the unidirectional data transmitter 70. The SDP file also contains the location information for specifying the location of the FDT (attribute information) of the electronic file to be transmitted from the unidirectional data transmitter 70. The SDP file transmitted from the data transmitter 80 is received by the bidirectional channel transmitter/receiver 112 of the data receiving apparatus 10 and is held (stored) in the SDP holder 114.

Subsequently, the delivery controller 116 reads the location information for specifying the location of the FDT, from the SDP file held in the SDP holder 114, and outputs the read location information to the bidirectional channel transmitter/receiver 112 (S106).

When the location information is outputted from the delivery controller 116, the bidirectional channel transmitter/receiver 112 transmits an FDT transmission request to the location specified by the location information, before the unidirectional channel receiver 102 starts to receive the electronic file (S108). After this FDT transmission request, the bidirectional channel transmitter/receiver 112 receives the FDT transmitted from the above location (S110). Using the bidirectional channel having been used for the acquisition of the SDP file (without disconnection), the FDT transmission request is transmitted and the FDT is received without establishment of another bidirectional channel. The FDT received by the bidirectional channel transmitter/receiver 112 is held (stored) in the FDT holder 106.

When the bidirectional channel transmitter/receiver 112 receives the FDT, the unidirectional channel receiver 102 refers to the SDP file held in the SDP holder 114, through the delivery controller 116 and establishes a unidirectional channel based on the session information included in the SDP file (S112). After the unidirectional channel is established, the unidirectional channel receiver 102 starts to receive the electronic files and the FDT transmitted from the unidirectional data transmitter 70 (S114). Here the electronic files and the FDT are transmitted and received in the form of segmental data forming the electronic file or the FDT, or redundant data for recovery of segmental data upon occurrence of a loss of segmental data.

These operations correspond, for example, to operations of receiving the SDP file and FDT through a point-to-point channel (bidirectional channel), thereafter establishing a point-to-multipoint channel (unidirectional channel) like the 3GPP MBMS channel, and receiving the electronic file and FDT through the 3GPP MBMS channel.

When the unidirectional channel receiver 102 receives the segmental data and redundant data, the file assembler 104 restores the electronic files and the FDT based on these segmental data and redundant data.

The FDT restored by the file assembler 104 is held (stored) in the FDT holder 106. The data stored in the FDT holder 106 includes both the FDT received by the bidirectional channel transmitter/receiver 112 and the FDT received by the unidirectional channel receiver 102. In this case, the FDT holder 106 may replace the FDT previously received by the bidirectional channel transmitter/receiver 112, with the FDT received thereafter by the unidirectional channel receiver 102. The FDT holder 106 may also be configured to extract a difference between the FDT previously received by the bidirectional channel transmitter/receiver 112 and the FDT received thereafter by the unidirectional channel receiver 102 and to add the difference to the FDT previously received by the bidirectional channel transmitter/receiver 112. The FDT holder 106 may also be configured to refer to an expiration period described in the FDT and to hold only the FDT falling within the expiration period.

The electronic files restored by the file assembler 104 are held (stored) in the file holder 108. The electronic files held in the file holder 108 are used in the application part 110 appropriately.

Subsequently, the action and effects of the data receiving apparatus according to the present embodiment will be described. In the data receiving apparatus 10 of the present embodiment, the delivery controller 116 acquires the location information of the FDT from the SDP file containing the description of the session information necessary for establishment of the unidirectional channel and, before the unidirectional channel receiver 102 starts to receive the electronic file, the bidirectional channel transmitter/receiver 112 acquires the FDT from the location specified by the location information. Therefore, the data receiving apparatus 10 is able to acquire the FDT corresponding to the electronic file, before starting to receive the electronic file through the unidirectional channel. As a result, the data receiving apparatus 10 is able to acquire the FDT that describes the attribute information about the electronic file, regardless of the timing of joining the session of unidirectional electronic file delivery, and to effectively utilize the electronic file.

For example, let us suppose that in Fig. 5 FDT 1 contains the description of the attribute information of electronic file 1 and the attribute information of electronic file 2, and FDT 2 contains the description of the attribute information of electronic file 2 and the attribute information of electronic file 3. It is also supposed that the unidirectional data transmitter 70 transmits FDT 1, electronic file 1, electronic file 2, FDT 2, and electronic file 3 in the order named. If the data receiving apparatus 10 joins the session of unidirectional electronic file delivery to start receiving electronic files immediately after transmission of FDT 1 from the unidirectional data transmitter 70, the data receiving apparatus 10 cannot acquire the FDT 1 from the unidirectional data transmitter 70. However, the data receiving apparatus 10 of the present embodiment is able to receive the FDT 1 from the data transmitter 80, before starting to receive the electronic files through the unidirectional channel. Therefore, the data receiving apparatus 10 is able to utilize the electronic file 1 with reference to the FDT 1 received from the data transmitter 80. In addition, the data receiving apparatus 10 is able to utilize the electronic file 2, without awaiting reception of FDT 2, with reference to the FDT 1 received from the data transmitter 80.

In the data receiving apparatus 10 of the present embodiment, the bidirectional channel transmitter/receiver 112 receives the FDT through the bidirectional channel used for acquisition of the SDP file. By receiving the FDT through the bidirectional channel, it becomes feasible to perform various controls in acquisition of the FDT, e.g., a retransmission process or designation of required data upon occurrence of a transmission error. Since the FDT is received through the bidirectional channel used for acquisition of the SDP file, there is no need for establishing a new bidirectional channel for acquisition of the FDT. As a result, it becomes feasible to reduce the traffic of control signals for establishment of the bidirectional channel and to shorten the time for acquisition of the FDT.

Subsequently, a first modification example of the data receiving apparatus 10 will be described. The data receiving apparatus 10 of the present modification example is different from the data receiving apparatus 10 of the above embodiment in that the data receiving apparatus 10 of the present modification example is constructed in a configuration wherein the SDP file and the FDT are transmitted to the data receiving apparatus 10 by an e-mail and wherein the delivery controller 116 (first attribute acquiring means) acquires the FDT from the e-mail, whereas the data receiving apparatus 10 of the above embodiment was constructed in the configuration wherein the bidirectional channel transmitter/receiver 112 (first attribute acquiring means) acquired the FDT through the bidirectional channel in accordance with the location information of the FDT included in the SDP file. The data receiving apparatus 10 of the present modification example will be described below in detail. Redundant description will be omitted for portions similar to those in the data receiving apparatus 10 of the above embodiment.

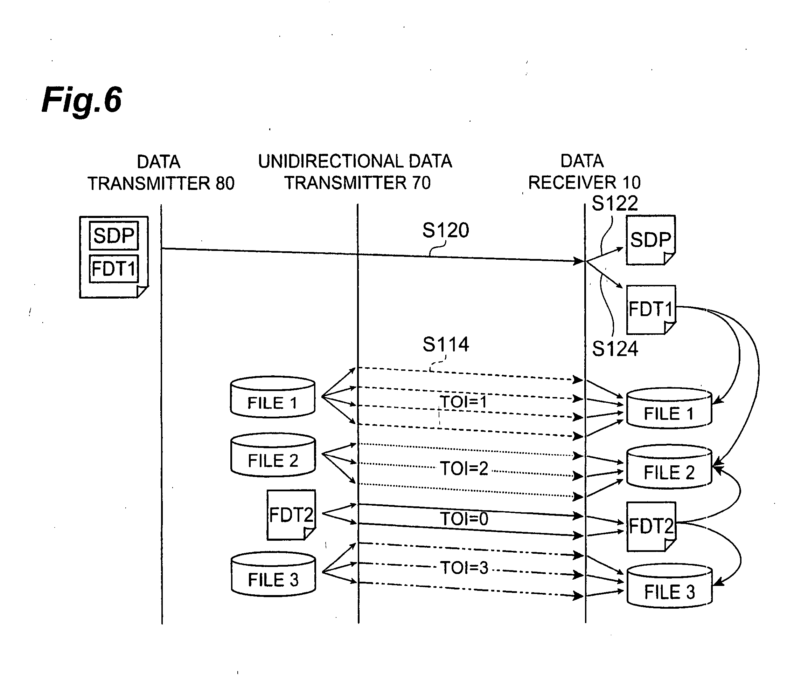

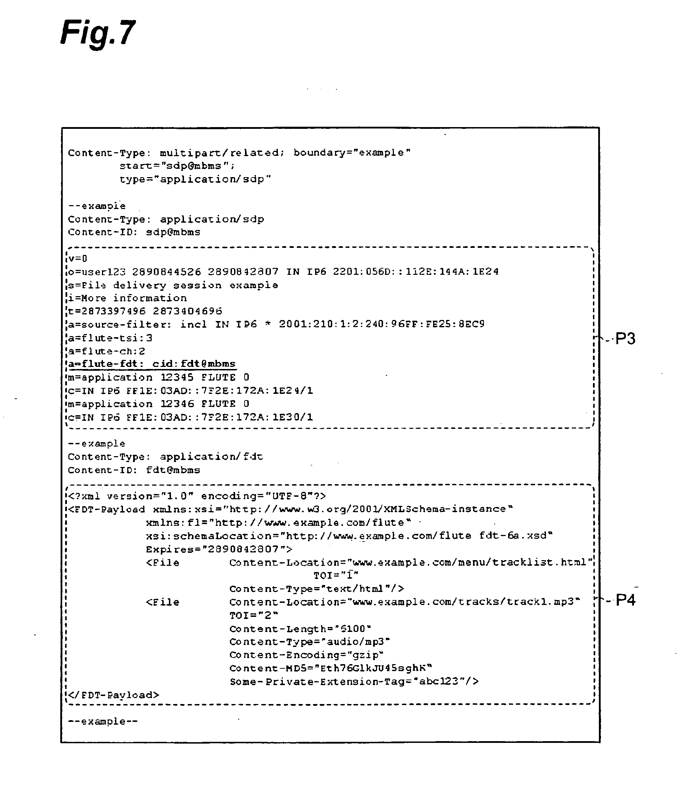

Fig. 6 is an illustration showing a delivery sequence of electronic files to the data receiving apparatus 10 of the present modification example. Before the data receiving apparatus 10 receives and utilizes electronic files to be transmitted from the unidirectional data transmitter 70, the data transmitter 80 first transmits an e-mail containing the SDP file and the FDT to the data receiving apparatus 10 (S120). Fig. 7 is an illustration showing a description example of the e-mail containing the SDP file and the FDT. The e-mail, as shown in Fig. 7, contains the SDP file (part P3 enclosed by dashed line) and the FDT (part P4 enclosed by dashed line). Such a mixed file is generated, for example, by use of the multipart function of MIME. The e-mail is received by the bidirectional channel transmitter/receiver 112 of the data receiving apparatus 10.

When the bidirectional channel transmitter/receiver 112 receives the e-mail, the delivery controller 116 extracts the SDP file from the e-mail (S122), and outputs the extracted SDP file to the SDP holder 114. The SDP holder 114 holds (or stores) the SDP file outputted from the delivery controller 116.

The delivery controller 116 also acquires the location information of the FDT file from the SDP file extracted as described above. Since the location information of the FDT file herein is "a=flute-fdt:cid:fdt@mbms" (underlined portion in Fig. 7), the delivery controller 116 understands that the FDT is included in the same e-mail as the SDP file is included, extracts the FDT from the e-mail (S124), and outputs the extracted FDT to the FDT holder 106. The FDT holder 106 holds (or stores) the FDT outputted from the delivery controller 116.

The operation thereafter is the same as the operation of the data receiving apparatus 10 of the above embodiment already described.

The data receiving apparatus 10 of the present modification example receives the e-mail containing the SDP file and the FDT, and extracts and utilizes each of the SDP file and the FDT from the e-mail. Therefore, the data receiving apparatus 10 is able to acquire both the SDP file and the FDT through one data transmission/reception. As a result, it is feasible to reduce transactions between the data transmitter 80 and the data receiving apparatus 10. By transmitting the SDP file and the FDT in the form of a mixed file by the e-mail, it becomes feasible to perform quick service notification from a contents provider or from a network operator.

Subsequently, a second modification example of the data receiving apparatus 10 will be described. The data receiving apparatus 10 of the present modification example is different from the data receiving apparatus 10 of the above embodiment in that the data receiving apparatus 10 of the present modification example is constructed in a configuration wherein when the unidirectional channel receiver 102 does not receive the FDT corresponding to an electronic file though receiving the electronic file, the bidirectional channel transmitter/receiver 112 (second attribute information acquiring means) acquires the FDT from the location specified by the location information acquired by the delivery controller 116. In addition, the data receiving apparatus 10 of the present modification example is constructed so that when the bidirectional channel transmitter/receiver 112 receives the FDT through the bidirectional channel, it selectively requests unreceived parts of FDT that describe attribute information about a received electronic file, and receives them. The data receiving apparatus 10 of the present modification example will be described below in detail. Redundant description will be omitted for portions similar to those in the data receiving apparatus of the above embodiment.

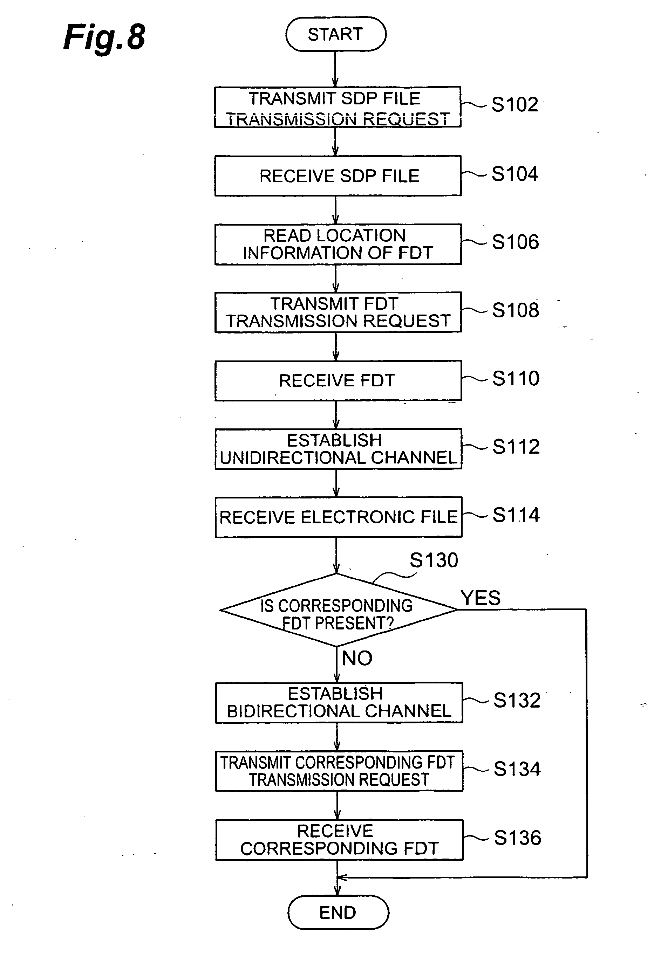

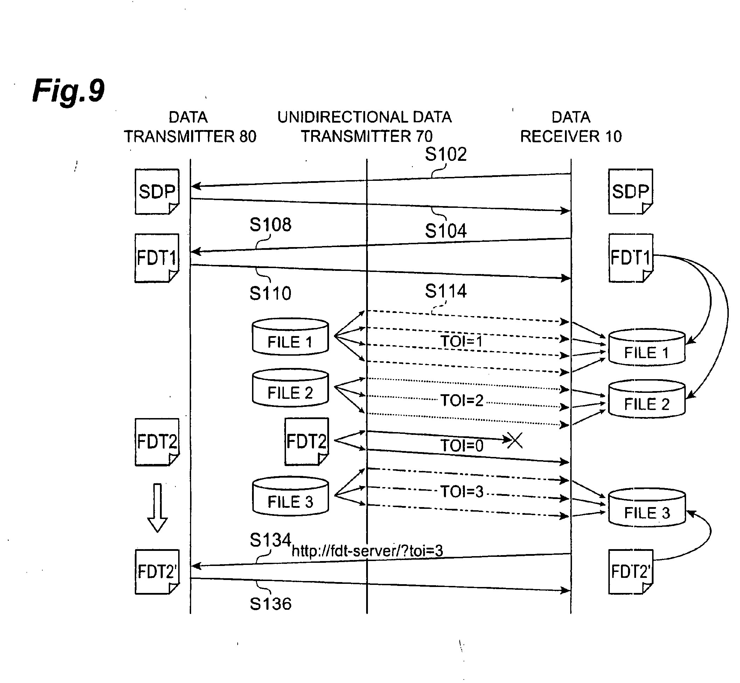

Fig. 8 is a flowchart showing the operation of the data receiving apparatus 10 of the present modification example, and Fig. 9 is an illustration showing a delivery sequence of electronic files to the data receiving apparatus 10 of the present modification example. The processes from the transmission of the SDP file transmission request (S102) to the start of reception of electronic files (S114) are the same as those in the data receiving apparatus 10 of the above embodiment already described.

The file assembler 104 assembles each FDT and each electronic file received by the unidirectional channel receiver 102, the FDT is held in the FDT holder 106, and the electronic file is held in the file holder 108.

When an electronic file assembled by the file assembler 104 is outputted to the file holder 108, the file holder 108 refers to the FDT holder 106 to check whether it has the FDT describing the attribute information of the electronic file (S130). When the FDT describing the attribute information of the electronic file is present in the FDT holder 106, the file holder 108 outputs the electronic file to the application part 110 to use the electronic file, based on the attribute information described in the FDT.

On the other hand, when the FDT describing the attribute information of the electronic file is not held in the FDT holder 106, the file holder 108 transmits an FDT request about the missing attribute information to the bidirectional channel transmitter/receiver 112.

Receiving the FDT request, the bidirectional channel transmitter/receiver 112 establishes a bidirectional channel for reception of the FDT from the data transmitter 80 which is the location of the FDT preliminarily acquired (S132). Thereafter, the bidirectional channel transmitter/receiver 112 transmits an FDT request about the missing attribute information through the bidirectional channel to the data transmitter 80 (S134) . That is, the bidirectional channel transmitter/receiver 112 selectively requests the data transmitter 80 to transmit the unreceived attribute information of the received electronic file.

Thereafter, the bidirectional channel transmitter/receiver 112 receives the FDT for the missing attribute information, transmitted from the data transmitter 80 (S136). Here the FDT transmitted from the data transmitter 80 is created so as to contain only the attribute information requested by the bidirectional channel transmitter/receiver 112. The FDT received by the bidirectional channel transmitter/receiver 112 is held (stored) in the FDT holder 106 and thereafter the unidirectional channel receiver 102 resumes receiving electronic files and FDTs.

For example, let us suppose that in Fig. 9 FDT 1 contains the description of the attribute information of electronic file 1 and the attribute information of electronic file 2 and FDT 2 contains the description of the attribute information of electronic file 2 and the attribute information of electronic file 3. It is also supposed that the unidirectional data transmitter 70 transmits FDT 1, electronic file 1, electronic file 2, FDT 2, and electronic file 3 in the order named. If the data receiving apparatus 10 joins the session of unidirectional electronic file delivery to start to receive electronic files immediately after transmission of the FDT 1 from the unidirectional data transmitter 70, the data receiving apparatus 10 cannot acquire the FDT 1 from the unidirectional data transmitter 70. However, since the data receiving apparatus 10 receives the FDT 1 from the data transmitter 80 before starting to receive electronic files through the unidirectional channel, it can use the FDT. Accordingly, the data receiving apparatus 10 utilizes the electronic file 1 and electronic file 2 with reference to the FDT 1 received from the data transmitter 80.

Let us suppose herein that the data receiving apparatus 10 failed to receive FDT 2 for some reason. In this case, even if the data receiving apparatus 10 receives the electronic file 3, it cannot utilize the electronic file 3, because the corresponding FDT is not held in the FDT holder 106. Therefore, the bidirectional channel transmitter/receiver 112 transmits a request for transmission of the attribute information of the electronic file 3 to the data transmitter 80. In this case, the bidirectional channel transmitter/receiver 112 transmits the request for transmission of the attribute information of electronic file 3, for example, by designating the URL of "http://fdt-server/?toi=3".

In this case, the data transmitter 80 modifies the FDT 2 containing the attribute information of electronic file 2 and the attribute information of electronic file 3, into FDT 2' containing only the attribute information of electronic file 3, and transmits the FDT 2' to the data receiving apparatus 10.

In the data receiving apparatus 10 of the present modification example, the location information for specifying the location of the FDT is acquired from the SDP file and, when the unidirectional channel receiver 102 does not receive the FDT of an electronic file though the unidirectional channel receiver 102 receives the electronic file, the bidirectional channel transmitter/receiver 112 acquires the FDT from the location specified by the location information. Therefore, the FDT of the electronic file can be acquired even if the data receiving apparatus 10 does not hold the FDT corresponding to the received electronic file because of loss of a packet or the like.

In the data receiving apparatus 10 of the present modification example, the bidirectional channel transmitter/receiver 112 selectively requests and receives only the unreceived attribute information of the received electronic file through the bidirectional channel. By receiving the attribute information through the bidirectional channel, it becomes feasible to perform various controls in acquisition of the attribute information, e.g., a retransmission process or designation of required data upon occurrence of a transmission error. By selectively requesting and receiving the unreceived attribute information of the received electronic file, it becomes feasible to efficiently acquire the attribute information required. As a result, it becomes feasible to minimize the traffic on the bidirectional channel used for transmission/reception of attribute information.

The data receiving apparatus 10 of the present modification example was constructed in the configuration wherein it immediately established the bidirectional channel and requested the FDT when it received an electronic file but it did not hold the FDT corresponding to an electronic file. However, the data receiving apparatus 10 may also be configured to request FDTs corresponding to a plurality of electronic files together at the end of the electronic file delivery session or after passage of a fixed time duration, for example, in cases where the electronic files do not have to be used immediately or where it is desired to reduce the frequency of establishment of the bidirectional channel. In such cases, the bidirectional channel transmitter/receiver 112 requests the attribute information of electronic file 3, electronic file 5, and electronic file 10 together, for example, by designating their URL like "http://fdt-server/?toi=3&toi=5&toi=10".

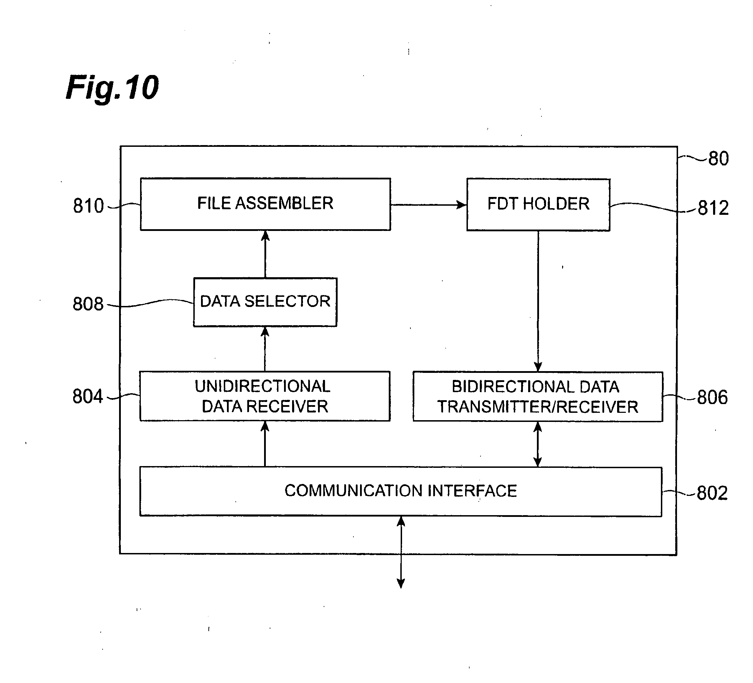

Subsequently, the data transmitter 80 for transmitting the FDT through the bidirectional channel to the data receiving apparatus 10 will be described. Fig. 10 is a configuration diagram of the data transmitter 80. The data transmitter 80 is comprised of a communication interface 802 for performing communication, a unidirectional data receiver 804 for receiving data by a unidirectional electronic file delivery protocol (FLUTE), a bidirectional data transmitter/receiver 806 for transmitting and receiving data by a bidirectional electronic file delivery protocol (HTTP), a data selector 808 for selecting data for construction of an FDT out of data received by the unidirectional data receiver 804, a file assembler 810 for assembling an FDT from data received by the unidirectional data receiver 804, and an FDT holder 812 holding an FDT assembled by the file assembler 810.

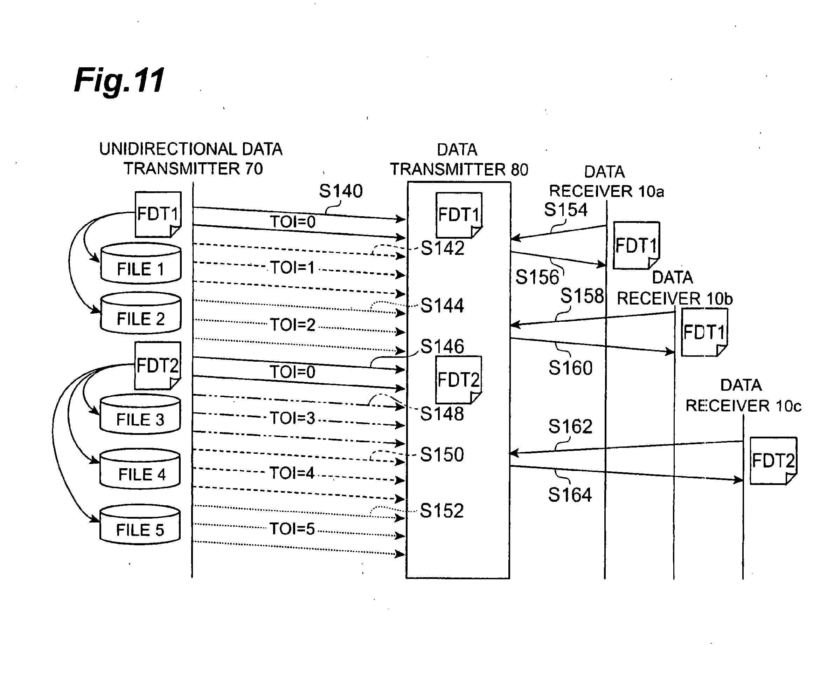

Fig. 11 is an illustration showing the operation of the data transmitter 80. The unidirectional data transmitter 70 transmits electronic files and FDTs describing the attribute information of the electronic files to the data transmitter 80 and to each of data receiving devices 10a, 10b, and 10c (though Fig. 11 is depicted without the operation of transmission of the electronic files and FDTs from the unidirectional data transmitter 70 to the data receiving devices 10a, 10b, and 10c). Here the data receiving devices 10a, 10b, and 10c start receiving the electronic files at their various timings. Therefore, the data transmitter 80 will transmit the FDTs to each of the data receiving devices 10a, 10b, 10c through the bidirectional channel at various timings. The operation will be specifically described below.

The unidirectional data transmitter 70 transmits electronic files and FDTs (metadata) describing the attribute information of the electronic files by broadcast or multicast. In the example shown in Fig. 11, the unidirectional data transmitter 70 first transmits FDT 1 describing the attribute information of electronic file 1 and the attribute information of electronic file 2 (S140), thereafter the transmitter 70 transmits electronic file 1 in the form of data packets (S142), and subsequently it transmits electronic file 2 in the form of data packets (S144). Thereafter, the data transmitter 70 transmits FDT 2 describing the attribute information of electronic file 3, the attribute information of electronic file 4, and the attribute information of electronic file 5 (S146), and subsequently transmits the electronic file 3, electronic file 4, and electronic file 5 each in the form of data packets (S148, S150, and S152).

The data transmitter 80 receives the data from the unidirectional data transmitter 70 (the data constituting the electronic files and the data constituting the FDTs) through the communication interface 802. The received data is transferred to the unidirectional data receiver 804 and further transferred to the data selector 808. The data selector 808 selects data with TOI=0, i.e., only the data constituting the FDT and discards all the other data (the data constituting the electronic files). The data selected by the data selector 808 is transferred to the file assembler 810 and the file assembler 810 assembles the FDT. The FDT assembled by file assembler 810 is held (stored) in the FDT holder 812. Here the FDT held in the FDT holder 812 is always rewritten into an up-to-date one. Specifically, in the case of the example shown in Fig. 11, the FDT holder 812 holds FDT 1 after the data transmitter 80 receives FDT 1 and before the data transmitter 80 receives FDT 2; however, when the data transmitter 80 receives FDT 2, the information held in the FDT holder 812 is rewritten into FDT 2.

On the other hand, when receiving an FDT transmission request from a data receiving device 10a-10c, the data transmitter 80 transmits the FDT held at that point in the FDT holder 812, to the requesting data receiving device 10a-10c. In the example shown in Fig. 11, when the data receiving device 10a transmits an FDT transmission request (S154), the FDT 1 held at that point in the FDT holder 812 is transmitted to the data receiving device 10a (S156). Similarly, when the data receiving device 10b transmits an FDT transmission request (S158), the FDT 1 held at that point in the FDT holder 812 is transmitted to the data receiving device 10b (S160). When the data receiving device 10c transmits an FDT transmission request (S162), because the information held in the FDT holder 812 is updated into FDT 2 before the FDT transmission request, the FDT 2 held at that point in the FDT holder 812 is transmitted to the data receiving device 10c (S164).

Since the data transmitter 80 is configured to acquire the FDT transmitted from the unidirectional data transmitter 70 and to provide it to the data receiving devices 10a-10c as described above, the data receiving devices 10a-10c become able to receive the same FDT as that transmitted from the unidirectional data transmitter 70.

Since the data transmitter 80 receives the FDT by FLUTE in the same manner as the other data receiving devices 10a-10c do, and updates the information held in the FDT holder 312, it is feasible to detect the update of FDT soon. In this case, the unidirectional data transmitter 70 needs only to transmit the electronic files and FDTs by FLUTE, and does not have to be equipped with another protocol.

The example herein described one in which the data transmitter 80 received the FDT delivered by FLUTE and in which the information held in the FDT holder 812 was updated by the FDT received in this manner. However, the data transmitter 80 may also be configured to acquire the FDT from the unidirectional data transmitter 70 by another method and to update the information held in the FDT holder 812.

## Claims

1. A data receiving apparatus (10) comprising:
receiving means (102) for receiving an electronic file and attribute information of the electronic file through a unidirectional channel;
location information acquiring means (116) for acquiring location information for specifying a location of the attribute information from session information necessary for the receiving means to establish a session through the unidirectional channel; and
attribute information acquiring means (112) for acquiring the attribute information from the location specified by the location information acquired by the location information acquiring means, before the receiving means starts receiving the electronic file.

2. The data receiving apparatus according to Claim 1, wherein the attribute information acquiring means is adapted to acquire the attribute information by receiving the attribute information through a bidirectional channel.

3. The data receiving apparatus according to Claim 2, wherein the attribute information acquiring means is adapted to receive the attribute information through the bidirectional channel used for acquisition of the session information.

4. A data receiving apparatus (10) comprising:
receiving means (102) for receiving an electronic file and attribute information of the electronic file through a unidirectional channel;
location information acquiring means (116) for acquiring location information for specifying a location of the attribute information from session information necessary for the receiving means to establish a session through the unidirectional channel; and
attribute information acquiring means (112) for acquiring the attribute information from the location specified by the location information acquired by the location information acquiring means, when the receiving means does not receive the attribute information of the electronic file even though the receiving means receives the electronic file.

5. The data receiving apparatus according to Claim 4, wherein the attribute information acquiring means is adapted to acquire the attribute information by receiving the attribute information through a bidirectional channel.

6. The data receiving apparatus according to Claim 5, wherein the attribute information acquiring means is adapted to selectively request the unreceived attribute information of the received electronic file, and receive the unreceived attribute information.

7. A data receiving method of receiving an electronic file and attribute information of the electronic file through a unidirectional channel, the data receiving method comprising:
a location information acquiring step of acquiring location information for specifying a location of the attribute information from session information necessary for establishment of a session through the unidirectional channel; and
an attribute information acquiring step of acquiring the attribute information from the location specified by the location information acquired in the location information acquiring step, before a start of receiving the electronic file through the unidirectional channel.

8. A data receiving method of receiving an electronic file and attribute information of the electronic file through a unidirectional channel, the data receiving method comprising:
a location information acquiring step of acquiring location information for specifying a location of the attribute information from session information necessary for establishment of a session through the unidirectional channel; and
an attribute information acquiring step of acquiring the attribute information from the location specified by the location information acquired in the location information acquiring step, when the attribute information of the electronic file is not received even though the electronic file is received through the unidirectional channel.

## Patentansprüche

1. Eine Vorrichtung für den Datenempfang (10) aufweisend:
Empfangsmittel (102) zum Empfangen einer elektronischen Datei und von Attributinformation der elektronischen Datei durch einen unidirektionalen Kanal; Standortinformationsbezugsmittel (116) zum Beziehen von Standortinformation zur Spezifikation eines Standortes der Attributinformation, aus Sitzungsinformation, die benötigt wird, damit die Empfangsmittel eine Sitzung durch den unidirektionalen Kanal einrichten können; und
Attributinformationsbezugsmittel (112) zum Beziehen der Attributinformation vom Standort, der durch die Standortinformation spezifiziert ist, die durch die Standortinformationsmittel bezogen wurde, bevor das Empfangsmittel beginnt, die elektronische Datei zu empfangen.

2. Die Vorrichtung für den Datenempfang nach Anspruch 1, worin das Attributinformationsbezugsmittel daran angepasst ist, die Attributinformation durch Empfangen der Attributinformation durch einen bidirektionalen Kanal zu beziehen.

3. Die Vorrichtung für den Datenempfang nach Anspruch 2, worin das Attributinformationsbezugsmittel daran angepasst ist, die Attributinformation durch den bidirektionalen Kanal zu beziehen, der für den Bezug der Sitzungsinformation verwendet wird.

4. Eine Vorrichtung für den Datenempfang (10) aufweisend:
Empfangsmittel (102) zum Empfangen einer elektronischen Datei und von Attributinformation der elektronischen Datei durch einen unidirektionalen Kanal; Standortinformationsbezugsmittel (116) zum Beziehen von Standortinformation zur Spezifikation eines Standortes der Attributinformation, aus Sitzungsinformation, die benötigt wird, damit die Empfangsmittel eine Sitzung durch den unidirektionalen Kanal einrichten können; und
Attributinformationsbezugsmittel (112) zum Beziehen der Attributinformation von dem Standort, der durch die Standortinformation spezifiziert wird, die durch die Standortinformationsbezugsmittel bezogen wurde, wenn das Empfangsmittel die Attributinformation der elektronischen Datei nicht empfängt, sogar obwohl das Empfangsmittel die elektronische Datei empfängt.

5. Die Vorrichtung für den Datenempfang nach Anspruch 4, worin das Attributinformationsbezugsmittel daran angepasst ist, die Attributinformation durch Empfangen der Attributinformation durch einen bidirektionalen Kanal zu beziehen.

6. Die Vorrichtung für den Datenempfang gemäß Anspruch 5, worin das Attributinformationsbezugsmittel daran angepasst ist, wahlweise die nicht empfangene Attributinformation der elektronischen Datei anzufordern und die nicht empfangene Attributinformation zu empfangen.

7. Ein Verfahren für den Datenempfang einer elektronischen Datei und von Attributinformation der elektronischen Datei durch einen unidirektionalen Kanal, wobei das Verfahren für den Datenempfang aufweist:
einen Standortinfonnationsbezugsschritt, des Beziehens von Standortinformation zur Spezifikation eines Standorts der Attributinformation aus Sitzungsinformation, die benötigt wird zur Einrichtung einer Sitzung durch den unidirektionalen Kanal; und
einen ersten Attributinformationsbezugsschritt des Beziehens der Attributinformation von dem Standort, der durch die Standortinformation spezifiziert ist, die im Standortinformationsbezugsschritt bezogen wurde, vor einem Start des Empfangs der elektronischen Datei durch den unidirektionalen Kanal.

8. Ein Verfahren für den Datenempfang des Empfangens einer elektronischen Datei und von Attributinformation der elektronischen Datei durch einen unidirektionalen Kanal, wobei das Verfahren für den Datenempfang aufweist:
einen Standortinformationsbezugsschritt des Beziehens von Standortinformation zur Spezifikation eines Standorts der Attributinformation, aus Sitzungsinformation, die benötigt wird zur Einrichtung einer Sitzung durch den unidirektionalen Kanal; und
einen Attributinformationsbezugsschritt des Beziehens der Attributinformation vom Standort, der durch die Standortinformation spezifiziert wird, die im Standortinformationsbezugsschritt bezogen wurde, wenn die Attributinformation der elektronischen Datei nicht empfangen wird, sogar obwohl die elektronische Datei durch den unidirektionalen Kanal empfangen wird.

## Revendications

1. Appareil récepteur de données (10) comprenant :
- des moyens de réception (102) pour recevoir un fichier électronique et des informations d'attribut du fichier électronique par un canal unidirectionnel ;
- des moyens d'acquisition d'informations d'emplacement (116) pour acquérir des informations d'emplacement afin de spécifier un emplacement des informations d'attribut à partir des informations de session nécessaires aux moyens de réception pour établir une session par le canal unidirectionnel ; et
- des moyens d'acquisition d'informations d'attribut (112) pour acquérir les informations d'attribut à partir de l'emplacement spécifié par les informations d'emplacement acquises par les moyens d'acquisition d'informations d'emplacement, avant que les moyens de réception ne commencent à recevoir le fichier électronique.

2. Appareil récepteur de données selon la revendication 1, dans lequel les moyens d'acquisition d'informations d'attribut sont adaptés pour acquérir les informations d'attribut en recevant les informations d'attribut par un canal bidirectionnel.

3. Appareil récepteur de données selon la revendication 2, dans lequel les moyens d'acquisition d'informations d'attribut sont adaptés pour recevoir les informations d'attribut par le canal bidirectionnel utilisé pour l'acquisition des informations de session.

4. Appareil récepteur de données (10) comprenant :
- des moyens de réception (102) pour recevoir un fichier électronique et des informations d'attribut du fichier électronique par un canal unidirectionnel ;
- des moyens d'acquisition d'informations d'emplacement (116) pour acquérir des informations d'emplacement afin de spécifier un emplacement des informations d'attribut à partir des informations de session nécessaires aux moyens de réception pour établir une session par le canal unidirectionnel ; et
- des moyens d'acquisition d'informations d'attribut (112) pour acquérir les informations d'attribut à partir de l'emplacement spécifié par les informations d'emplacement acquises par le moyen d'acquisition d'informations d'emplacement, lorsque les moyens de réception ne reçoivent pas les informations d'attribut du fichier électronique même si les moyens de réception reçoivent le fichier électronique.

5. Appareil récepteur de données selon la revendication 4, dans lequel les moyens d'acquisition d'informations d'attribut sont adaptés pour acquérir les informations d'attribut en recevant les informations d'attribut par un canal bidirectionnel.

6. Appareil récepteur de données selon la revendication 5, dans lequel les moyens d'acquisition d'informations d'attribut sont adaptés pour demander de manière sélective les informations d'attribut non reçues du fichier électronique reçu et pour recevoir les informations d'attribut non reçues.

7. Procédé de réception de données comprenant la réception d'un fichier électronique et des informations d'attribut du fichier électronique par un canal unidirectionnel, le procédé de réception de données comprenant :
- une étape d'acquisition d'informations d'emplacement consistant à acquérir des informations d'emplacement afin de spécifier un emplacement des informations d'attribut à partir des informations de session nécessaires à l'établissement d'une session par le canal unidirectionnel ; et
- une étape d'acquisition d'informations d'attribut consistant à acquérir les informations d'attribut à partir de l'emplacement spécifié par les informations d'emplacement acquises à l'étape d'acquisition d'informations d'emplacement, avant le début de la réception du fichier électronique par le canal unidirectionnel.

8. Procédé de réception de données comprenant la réception d'un fichier électronique et des informations d'attribut du fichier électronique par un canal unidirectionnel, le procédé de réception de données comprenant :
- une étape d'acquisition d'informations d'emplacement consistant à acquérir des informations d'emplacement afin de spécifier un emplacement des informations d'attribut à partir des informations de session nécessaires à l'établissement d'une session par le canal unidirectionnel ; et
- une étape d'acquisition d'informations d'attribut consistant à acquérir les informations d'attribut à partir de l'emplacement spécifié par les informations d'emplacement acquises à l'étape d'acquisition d'informations d'emplacement, lorsque les informations d'attribut du fichier électronique ne sont pas reçues même si le fichier électronique est reçu par le canal unidirectionnel.
